# EUROPÄISCHE PATENTSCHRIFT

(11) **EP 2 364 839 B1**
(45) Veröffentlichungstag und Bekanntmachung des Hinweises auf die Patenterteilung: **21.03.2012**
(21) Anmeldenummer: 11000769.7
(22) Anmeldetag: 01.02.2011
(51) Int. Cl.: B32B 5/02, B32B 27/38, E04B 1/80, E04C 2/02, E04F 13/02

(54) **Mehrschichtiges Beschichtungssystem mit einer Deckschicht aus einem 2-Komponenten-Reaktionsharz**
Multilayer digital coating system with an overlay of 2-component thermosetting resin
Système de revêtement multicouche doté d'une couche de recouvrement composée d'une résine de réaction à 2 composantes

(30) Priorität: 02.03.2010 DE 102010009938
(43) Veröffentlichungstag der Anmeldung: 14.09.2011
(73) Patentinhaber: WEDI GmbH, 48282 Emsdetten (DE)
(72) Erfinder: Wedi, Stephan, 48282 Emsdetten (DE)
(74) Vertreter: Hoffmeister, Helmut

(56) Entgegenhaltungen:
- DE-A1- 3 706 296
- DE-U1- 20 204 490
- KR-A- 20050 017 293

## Beschreibung

Die Erfindung betrifft ein mehrschichtiges Beschichtungssystem für einen Körper, letzterer bestehend aus einem ein Substrat für das Beschichtungssystem bildenden Baustoff, wobei wenigstens eine Schicht des Beschichtungssystems eine Deckschicht aus einem 2-Komponenten-Reaktionsharz, nämlich ein Epoxidharz, ist, die mit einem harten Granulat besandet ist. Weiterhin bezieht sich die Erfindung auch auf ein Verfahren zu Herstellung des Beschichtungssystems.

Der das Substrat umfassende Baustoff ist vorzugsweise eine polygonale Platte. Es soll aber nicht ausgeschlossen werden, dass auch andere Formen, wie Winkelstücke, Kuppeln, geschlossene Hohlkörper oder dergl. als zu beschichtende Körper in Frage kommen. Unter 2-Komponenten-Reaktionsharzen sollen in erster Linie Epoxidharze (EP-Harzen), die Umsetzungsprodukte aus Epichlorhydrin und Bisphenol A und/oder Bisphenol F sind, verstanden werden.

Es soll aber nicht ausgeschlossen werden, dass auch Spezialharze eingesetzt werden, wie solche auf der Basis von Novolacken, Aminen, halogenierten Phenolen oder Cycloaliphaten an sich bekannt sind.

Die Länge der Molekülketten bei den hauptsächlich eingesetzten Epoxidharzen ist vom Mol-Verhältnis Epichlorhydrin zu Bisphenol abhängig, wobei der Aggregatzustand von flüssig bis fest reicht. Wesentlich ist, dass zunänchst ein Auftrag auf die Substratoberfläche in niedrigviskosem Zustand erfolgt, in der die Komponenten klebrig-dickflüssig sind und dass dann die Substanz innerhalb einer Härtezeit zu einer festen Schicht aushärtet.

EP-Harze besitzen ein relativ geringes Wasseraufnahmevermögen. So wird nach DIN 53472 bei einer EP-Formmasse in Granulatform lediglich 10 mg Wasseraufnahme gemessen. Eine EP-Harzschicht hat demnach nach Dicke und Konsistenz eine wasserdichte und dampfbremsende Funktion.

Es zeigt sich allerdings, dass Beimischungen von Füllstoffen und Armierungen, die innerhalb des gesamten Volumens der EP-Harze verteilt sind, die dampfbremsende Wirkung herabsetzen. Andererseits sind beispielsweise Füll- und Armierungsstoffe, wie Glasfasern, ein wesentliches Element, um die mechanische Biege- und Druckfestigkeit zu erhöhen. Diese Druckfestigkeit ist insbesondere bei besandeten Schichten erforderlich. Unter Besandung soll allgemein das Bestreuen mit harten, druckfesten Granulaten verstanden werden, wie Quarzsand, granulierten Gesteinen oder Duroplasten.

Für die Erfindung stellt sich die Aufgabe, ein Beschichtungssystem für einen zu beschichtenden Körper der eingangs genannten Art anzugeben, bei dem sich die Beschichtung in quantitativ wiederholbarer Weise so einstellen lässt, dass diese wasserundurchlässig und dampfbremsend ist und bleibt, wobei der lokale Druck von Besandungsgranulaten, soweit dieser in der Praxis zu erwarten ist, aufgefangen wird und nicht zu einer Zerstörung und Beschädigung des Beschichtungssystems führt. Letzteres könnte die dampfbremsende Eigenschaft im Wesentlichen aufheben.

Diese Aufgabe wird bei einem Beschichtungssystem gelöst, das sandwichartig aus wenigstens drei Schichten aufgebaut ist, nämlich aus einer ersten, körperkontaktierenden Basisschicht aus einem faser- und granulatfreien 2-Komponenten-Epoxidharz, einer Zwischenschicht aus einem flachliegenden Wirrfaservlies und der besandeten Deckschicht, die ebenfalls aus einem faser- und granulatfreiem 2-Komponenten-Epoxidharz besteht.

Bei Verwendung eines zunächst niedrigviskosen 2-Komponenten-Epoxidharzes als Reaktionsgemisch lässt sich erreichen, dass die Verbindung der Schichten untereinander durch das in das Wirrfaservlies im niedrigviskosen Zustand eingedrungene und ausgehärtete 2-Komponenten-Reaktionsharz hergestellt wird.

Vorzugsweise beträgt die die Dicke von Basis- und Deckschicht jeweils zwischen 0,3 und 5 mm.

Die Fasern der Wirrfaserschicht sind vorzugsweise feuchtigkeitsunempfindlich und ausgewählt aus der Gruppe Glasfasern, Polymerfasern, Cellulosefasern und/oder Carbonfasern, auch in Form von Hybridfasern. Unter Hybridfasern werden solche verstanden, die aus mehreren Stoffen zusammengesetzt sind, beispielsweise aus einem hochschmelzenden Polymer im Innern und einem bei geringerer Temperatur schmelzenden Polymer auf der Außenseite.

Beim Aufbringen der Fasern werden diese so gelegt, dass die Wirrfaserschicht aus liegenden, ein ungepresstes Vlies bildenden Fasern besteht.

Die Fasern haben vorzugsweise eine Länge (Titer) von 1 mm bis 20 mm und/oder einen Faserdurchmesser zwischen 0,1 mm bis 1 mm. Die Belegung mit Fasern beträgt vorzugsweise zwischen 10 und 100g pro m² Beschichtungsfläche.

Vorzugsweise ist die Deckschicht mit Quarzsand der Korngröße 0,125 mm bis 5 mm und/oder Quarzmehl an ihrer Außenseite überzogen ist.

Bei Verwendung von Epoxidharzen aus Epichlorhydrin-Bisphenol-Kondensaten sollte das mittlere Molverhältnis von Epichlorhydrin zu Bisphenol A zwischen 1,4 und 1,7 liegen.

Wenigstens eine der Epoxidharzschichten ist vorzugsweise durch Kalt- und/oder Warmhärtung gehärtet.

Das Beschichtungssystem lässt sich mit Vorteil insbesondere auf einem Baustoff aus einem Polystyrol-Hartschaumkunststoff aus der Gruppe der XPS- oder EPS-Schaumstoffe einsetzen. Dabei kann zusätzlich zwischen der Basisschicht und dem als Baustoff gewählten Polystyrol-Hartschaumkunststoff eine vorzugsweise armierte Mörtelschicht eingebaut sein.

Bei einem Beschichtungssystem lässt sich die Schichtenfolge auch wiederholen: Auf die die erste Sandwichkonfiguration bildende Schichtfolge sind wenigstens eine weitere Zwischenschicht aus einem Wirrfaservlies und wenigstens eine weitere Deckschicht aufgebracht. Die Besandung erfolgt selbstverständlich nur einmal auf der außen liegenden Schicht.

Die Erfindung bezieht sich zudem auf ein Verfahren zur Herstellung eines beschichteten Körpers gemäß Anspruch 1. Dabei wird eine zu einer Epoxidharzmasse erhärtende 2-Komponenten-Masse auf die Oberfläche des Körpers aufgespritzt; anschließend werden Fasern aufgestreut oder mittels Druckluft auf die noch niedrig-viskose Schicht aufgeblasen, die sich mit der noch nicht ausgehärteten Basis-Epoxidharzschicht verbinden. Danach härtet die Epoxidharzschicht unter Kalt- und/oder Warmhärtung aus. Danach wird die zweite 2-Komponenten-Epoxidharzmasse in niedrigviskoser Konsistenz aufgebracht, wobei sich die Schichten untereinander durch das in das Wirrfaservlies im niedrigviskosen Zustand eingedrungene und aushärtende 2-Komponenten-Reaktionsharz verbinden. Zum Schluss wird die Deckschicht außenseitig besandet.

Die Fasern können über ein Streusieb auf die noch nicht ausgehärtete Epoxidharzschicht aufgebracht werden.

Vorzugsweise werden die Fasern aus zugeführten Faserrovings unmittelbar vor Aufbringung auf die niedrigviskose 2-Komponenten-Epoxidharzmasse geschnitten und aufgestreut.

Eine weitere Möglichkeit, die Fasern einzubringen, besteht darin, das Wirrfaservlies als Vliesstoffschicht auf einer Trägerfolie einzubringen, wobei die Trägerfolie auf der Basisschicht verklebt wird. Die Deckschicht und die Besandung werden dann in der bereits beschriebenen Art aufgebracht.

Die Erfindung bezieht sich ferner auf eine beschichtete Bauplatte, umfassend ein Substrat aus Kunststoff-Hartschaum, auf das einseitig eine Basisschicht aus erhärteter Epoxidharzmasse aufgebracht ist, mit der eine Wirrfaserschicht verbunden ist, bei der sich die Schichten untereinander durch das in das Wirrfaser im niedrigviskosem Zustand eingedrungene und ausgehärtete Epoxidharz verbunden haben und eine Deckschicht bilden, wobei letztere mit einer Besandung auf ihrer Außenseite versehen ist.

Die Erfindung wird anhand von eines Ausführungsbeispieles gemäß den Figuren erläutert. Die Figuren zeigen im Einzelnen:
- Fig. 1: ein Zwischenprodukt einer mit einem Beschich- tungssystem versehenen Bauplatte;
- Fig. 2: die mit einem Beschichtungssystem versehene Bauplatte.

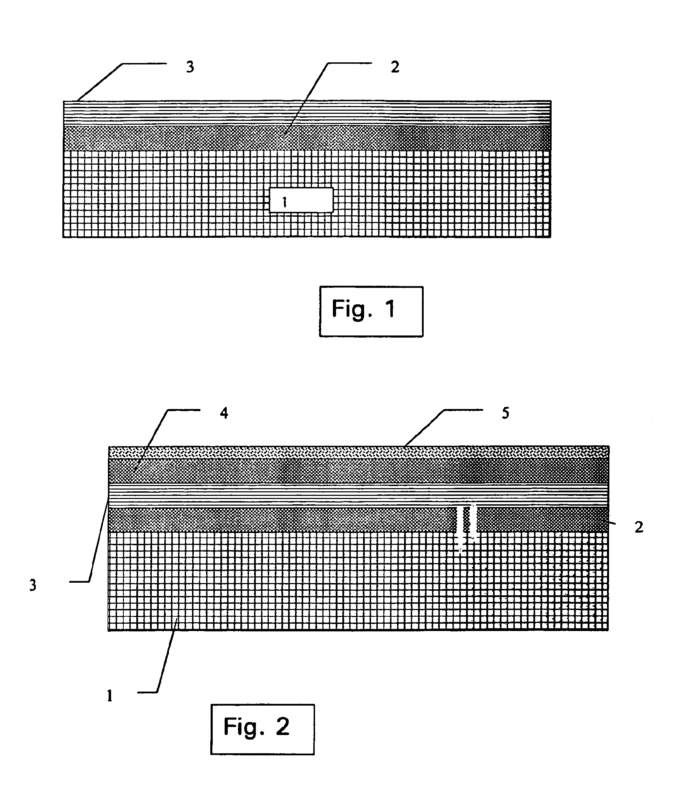

Eine formstabile XPS-Schaumstoffplatte 1 mit einer Raummasse wird als Bauplatte mit einer Dicke von 80 bis 120 mm eingesetzt. Demnach entsprechen die Größenverhältnisse von Plattendicke und Beschichtungsdicke, wie in den Figuren 1 und 2 dargestellt, nicht der Wirklichkeit.

Bei der Baustoffplatte gemäß Figur 1 wird auf die offene Oberfläche der Platte 1, die den Baustoff-Körper bildet, eine Epoxidharz-Schicht 2 durch Spritzen aufgebracht. Die Dicke der EP-Harz-Schicht 2 beträgt nach dem Spritzvorgang zwischen 0,2 bis 5 mm und wird auf gleichmäßige Dicke egalisiert. Vor dem Aushärten der Schicht 2 werden Glasfasern mittels Druckluft auf die Oberfläche der Schicht 2 aufgeblasen. Die Fasern verbinden sich unter Eindrücken und Verkleben mit der EP-Harz-Schicht 2 und legen sich glatt an, d.h. bilden keine Konglomerate mit aufgestellten Fasern ("Igel-Konfiguration"). Die Fasern bilden danach eine Vliesschicht 3 aus überwiegend liegenden, ungepressten Fasern ähnlich einem Vliesstoff. Die Glasfasern haben überwiegend 1 mm bis 20 mm Länge. Der Faserdurchmesser beträgt zwischen 0,1 bis 1 mm. Die Belegung mit Fasern sollte zwischen 10 und 100g/m² Beschichtungsfläche liegen.

Anstelle von Glasfasern können auch wenigstens zum Teil Polymerfasern, zum Beispiel PE-, PP- oder Polyethylenterephthalat-Fasern, bis hin zu Carbonfasern eingesetzt werden. Auch Cellulosefasern können eingesetzt werden.

In Figur 2 ist die Beschichtung weitergeführt. Auf der Schicht 3 gemäß Fig. 1 wird eine weitere EP-Harz-Schicht 4 aufgesprüht. Die Dicke der Schicht 4 beträgt etwa 0,2 bis 5 mm. Auf diese Schicht 4 wird vor der endgültigen Aushärtung eine Schicht aus Quarzsand der Körnungsgröße 0,125 bis 5 mm aufgeblasen, so dass sich eine weitgehend dichte "Besandung" ergibt, deren Dicke der mittleren Dicke des Granulatkornes, also etwa 3,5 mm, entspricht. Genaue Einstellungen und Auswahl der zu verwendenden Stoffe in Bezug auf die Dampfbremsfähigkeit werden empirisch ausgewählt nach Substrat und gewünschter diffusionsäquivalenter Luftschichtdicke. Es zeigt sich, dass insbesondere im Bereich einer diffusionsäquivalenten Luftschichtdichte S_{d} zwischen 0,5 und 250 m eine gut einstellbare Wiederholbarkeit der geforderten Werte von S_{d} erreicht werden kann.

## Patentansprüche

1. Mehrschichtiges Beschichtungssystem für einen Körper (1), letzterer bestehend aus einem ein Substrat für das Beschichtungssystem bildenden Baustoff, wobei wenigstens eine Schicht des Beschichtungssystems eine Deckschicht aus einem 2-Komponenten-Epoxidharz ist, die mit einem harten Granulat besandet ist, **dadurch gekennzeichnet, dass** das Beschichtungssystem sandwichartig aus wenigstens drei Schichten aufgebaut ist, nämlich aus einer ersten, körperkontaktierenden Basisschicht (2) aus einem faser- und granulatfreiem 2-Komponenten-Epoxidharz, einer Zwischenschicht aus einem flachliegenden Wirrfaservlies (3) und der besandeten Deckschicht (4) aus einem faser- und granulatfreien 2-Komponenten-Epoxidharz.

2. Beschichtungssystem nach Anspruch 1, **dadurch gekennzeichnet, dass** die Verbindung der Schichten untereinander durch das in das Wirrfaservlies (3) im niedrigviskosen Zustand eingedrungene und ausgehärtete 2-Komponenten-Epoxidharz hergestellt ist.

3. Beschichtungssystem nach Anspruch 1, **dadurch gekennzeichnet, dass** das Wirrfaservlies als Vliesstoffschicht auf einer Trägerfolie eingebracht ist, wobei die Trägerfolie auf der Basisschicht verklebt ist.

4. Beschichtungssystem nach Anspruch 1 bis 3, **dadurch gekennzeichnet, dass** die Dicke von Basis- und Deckschicht (2; 4) jeweils zwischen 0,3 und 5 mm beträgt.

5. Beschichtungssystem nach Anspruch 1, **dadurch gekennzeichnet, dass** die Fasern der Wirrfaserschicht (3) feuchtigkeitsunempfindlich sind und ausgewählt sind aus der Gruppe Glasfasern, Polymerfasern, Cellulosefasern und/oder Carbonfasern, auch in Form von Hybridfasern.

6. Beschichtungssystem nach einem der vorhergehenden Ansprüche, **dadurch gekennzeichnet, dass** die Wirrfaserschicht (3) aus liegenden, ein ungepresstes Vlies bildenden Fasern besteht.

7. Beschichtungssystem nach Anspruch, **dadurch gekennzeichnet, dass** die Fasern eine Länge (Titer) von 1 mm bis 20 mm haben und dass der Faserdurchmesser zwischen 0,1 mm bis 1 mm beträgt.

8. Beschichtungssystem nach Anspruch 1, **dadurch gekennzeichnet, dass** die Belegung mit Fasern in der Wirrfaserschicht (3) zwischen 10 und 100g pro m² Beschichtungsfläche beträgt.

9. Beschichtungssystem nach Anspruch 1, **dadurch gekennzeichnet, dass** die Deckschicht mit Quarzsand der Korngröße 0,125 mm bis 5 mm und/oder Quarzmehl an ihrer Außenseite überzogen ist.

10. Beschichtungssystem nach Anspruch 1, **dadurch gekennzeichnet, dass** bei Verwendung von Epoxidharzen aus Epichlorhydrin-Bisphenol-Kondensaten das mittlere Molverhältnis von Epichlorhydrin zu Bisphenol A zwischen 1,4 und 1,7 liegt.

11. Beschichtungssystem nach Anspruch 1, **dadurch gekennzeichnet, dass** als Baustoff für den als Substrat zu beschichtenden Körper (1) ein Polystyrol-Hartschaumkunststoff aus der Gruppe XPS- oder EPS-Schaumstoffe gewählt ist.

12. Beschichtungssystem nach Anspruch 11, **dadurch gekennzeichnet, dass** zwischen der Basisschicht und dem als Baustoff gewählten Polystyrol-Hartschaumkunststoff eine vorzugsweise armierte Mörtelschicht als weitere Schicht eingebaut ist.

13. Beschichtungssystem nach Anspruch 1, **dadurch gekennzeichnet, dass** auf die die erste Sandwichkonfiguration bildende Schichtfolge (2+3+4) wenigstens eine weitere Zwischenschicht aus einem Wirrfaservlies und wenigstens eine weitere Deckschicht aufgebracht sind.

14. Verfahren zur Herstellung eines Beschichtungssystems auf einem Körper, letztere bestehend aus ein Substrat für das Beschichtungssystem bildenden Baustoff, **dadurch gekennzeichnet, dass** eine zu einer Epoxidharzmasse erhärtende 2-Komponenten-Masse auf die Oberfläche des Körpers aufgespritzt, wird und anschließend Fasern mittels Druckluft auf die noch niedrig-viskose Schicht aufgeblasen oder aufgestreut werden, die sich mit der noch nicht ausgehärteten Epoxidharzschicht verbinden, dass danach die Epoxidharzschicht unter Kalt- und oder Warmhärtung ausgehärtet wird, und dass danach eine zweite 2-Komponenten-Epoxidharzmasse in niedrigviskoser Phase aufgebracht wird, wobei sich die Schichten untereinander durch das in das Wirrfaservlies im niedrigviskosen Zustand eingedrungene und aushärtende 2-Komponenten-Epoxidharz verbinden, und dass die Deckschicht außenseitig besandet wird.

15. Verfahren nach Anspruch 14, **dadurch gekennzeichnet, dass** die Fasern über ein Streusieb auf die noch nicht ausgehärtete Epoxidharzschicht aufgebracht werden.

16. Verfahren nach Anspruch 14, **dadurch gekennzeichnet, dass** die Fasern aus zugeführten Faserrovings unmittelbar vor Aufbringung auf die niedrigviskose 2-Komponenten-Epoxidharzmasse geschnitten und aufgestreut werden.

17. Verfahren zur Herstellung eines Beschichtungssystems gemäß Anspruch 14, **dadurch gekennzeichnet, dass** ein Wirrfaservlies als Vliesstoffschicht auf eine Trägerfolie aufgebracht wird, dass eine zu einer Epoxidharzmasse erhärtende 2-Komponenten-Masse auf die Oberfläche des Körpers als Basisschicht aufgespritzt wird und die Trägerfolie mit dem Vlies auf der Basisschicht verklebt wird, dass danach eine zweite 2-Komponenten-Epoxidharzmasse als Deckschicht in niedrigviskoser Phase auf die Vliesstoffschicht aufgebracht wird und dass die Deckschicht außenseitig besandet wird.

18. Beschichtete Bauplatte, umfassend ein Substrat (1) aus Kunststoff-Hartschaum, auf das einseitig eine Basisschicht aus erhärteter Epoxidharzmasse aufgebracht ist, mit der eine Wirrfaserschicht (3) verbunden ist, bei der sich die Schichten untereinander in das durch in die Wirrfaserschicht in niedrigviskosem Zustand eingedrungene und ausgehärtete Epoxidharz verbunden haben und eine Deckschicht (4) bilden, wobei letztere mit einer Besandung (5) auf ihrer Außenseite versehen ist.

## Claims

1. Multi-layer coating system for a body (1), this body consisting of structural material forming a substrate for the coating system, wherein at least one layer of the coating system is a cover layer made from a 2-component epoxy resin, which cover layer is sanded with hard granulate material, **characterised in that** the coating system is built up in a sandwich-like manner from at least three layers, namely from a first base layer (2) in contact with the body and consisting of a fibre-free and granulate material-free 2-component epoxy resin, from an intermediate layer consisting of a flat randomly-oriented-fibre non-woven material (3), and from the sanded cover layer (4) consisting of a fibre-free and granulate material-free 2-component epoxy resin.

2. Coating system as claimed in claim 1, **characterised in that** bonding of the layers to each other is produced by the 2-component epoxy resin which has penetrated into the randomly-oriented-fibre non-woven material (3) in the low-viscosity state and has hardened.

3. Coating system as claimed in claim 1, **characterised in that** the randomly-oriented-fibre non-woven material is introduced as a non-woven material layer on a carrier film, wherein the carrier film is adhered to the base layer.

4. Coating system as claimed in claims 1 to 3, **characterised in that** the thickness of the base and cover layers (2; 4) is between 0.3 and 5 mm in each case.

5. Coating system as claimed in claim 1, **characterised in that** the fibres of the randomly-oriented-fibre layer (3) are not moisture-sensitive and are selected from the group of glass fibres, polymer fibres, cellulose fibres and/or carbon fibres, including in the form of hybrid fibres.

6. Coating system as claimed in any one of the preceding claims, **characterised in that** the randomly-oriented-fibre layer (3) consists of flat fibres forming an unpressed non-woven material.

7. Coating system as claimed in claim *[lacuna],* **characterised in that** the fibres have a length (titre) of 1 mm to 20 mm and that the fibre diameter is between 0.1 mm to 1 mm.

8. Coating system as claimed in claim 1, **characterised in that** the coverage with fibres in the randomly-oriented-fibre layer (3) is between 10 and 100 g per m² of coating surface.

9. Coating system as claimed in claim 1, **characterised in that** the cover layer is coated on its outside with silica sand having a particle size of 0.125 mm to 5 mm and/or quartz powder.

10. Coating system as claimed in claim 1, **characterised in that**, when using epoxy resins consisting of epichlorohydrin-bisphenol condensates, the average molar ratio of epichlorohydrin to bisphenol A is between 1.4 and 1.7.

11. Coating system as claimed in claim 1, **characterised in that** the structural material for the body (1) to be coated as the substrate is a rigid polystyrene foam synthetic material selected from the group of XPS or EPS foams.

12. Coating system as claimed in claim 11, **characterised in that** a preferably reinforced mortar layer is incorporated as a further layer between the base layer and the rigid polystyrene foam synthetic material selected as the structural material.

13. Coating system as claimed in claim 1, **characterised in that** at least one further intermediate layer consisting of a randomly-oriented-fibre non-woven material and at least one further cover layer are applied onto the layer sequence (2+3+4) forming the first sandwich configuration.

14. Method for producing a coating system on a body, this consisting of a structural material forming a substrate for the coating system, **characterised in that** a 2-component mass which hardens to form an epoxy resin mass is sprayed onto the surface of the body, and subsequently fibres are blown onto the layer, which still has low viscosity, by means of compressed air, or are scattered thereon, and bond to the still unhardened epoxy resin layer, that the epoxy resin layer is then hardened by way of cold and/or hot curing, and that then a second 2-component epoxy resin mass is applied in a low-viscosity phase, wherein the layers bond to each other by way of the 2-component epoxy resin which has penetrated into the randomly-oriented-fibre non-woven material in the low-viscosity state and has hardened, and that the cover layer is sanded on the outside.

15. Method as claimed in claim 14, **characterised in that** the fibres are applied onto the still unhardened epoxy resin layer by way of a scattering screen.

16. Method as claimed in claim 14, **characterised in that** the fibres from supplied fibre rovings are cut and scattered immediately before application to the low-viscosity 2-component epoxy resin mass.

17. Method for producing a coating system as claimed in claim 14, **characterised in that** a randomly-oriented-fibre non-woven material is applied as a non-woven material layer onto a carrier film, that a 2-component mass which hardens to form an epoxy resin mass is sprayed onto the surface of the body as the base layer, and the carrier film is adhered to the non-woven material on the base layer, that a second 2-component epoxy resin mass is then applied as a cover layer in a low-viscosity state onto the non-woven material layer, and that the cover layer is sanded on the outside.

18. Coated building board, comprising a substrate (1) consisting of a rigid synthetic material foam, onto one side of which a base layer is applied which consists of a hardened epoxy resin mass, to which a randomly-oriented-fibre layer (3) is bonded, in which the layers have been bonded together into the epoxy resin which has penetrated into the randomly-oriented-fibre layer in the low-viscosity state and has hardened, and form a cover layer (4), wherein the latter is provided with a sand-finishing (5) on its outside.

## Revendications

1. Système de revêtement multicouche pour un corps (1) composé d'un matériau formant un substrat pour ledit système de revêtement, dans lequel au moins une couche du système est une couche de recouvrement réalisée en une résine époxy à deux composants et sablée d'un granulat dur, **caractérisé en ce que** le système de revêtement est constitué, en sandwich, d'au moins trois couches, à savoir d'une première couche de fond (2) qui est en contact avec le corps (1) et réalisée en une résine époxy à deux composants exempte de fibres et de granulat, d'une couche intermédiaire (3) composée d'un non-tissé à fibres embrouillées reposant à plat, et de la couche de recouvrement sablée (4) réalisée en une résine époxy à deux composants exempte de fibres et de granulat.

2. Système de revêtement selon la revendication 1, **caractérisé en ce que** la liaison entre les différentes couches est réalisée par la résine époxy à deux composants qui, en phase de faible viscosité, pénètre et durcit dans le non-tissé à fibres embrouillées.

3. Système de revêtement selon la revendication 1, **caractérisé en ce que** le non-tissé à fibres embrouillées est introduit sous forme d'étoffe nappée disposée sur une feuille de support qui est collée sur la couche de fond.

4. Système de revêtement selon les revendications 1 à 3, **caractérisé en ce que** l'épaisseur de la couche de fond (2) et de la couche de recouvrement (4) est comprise chacune entre 0,3 et 5 mm.

5. Système de revêtement selon la revendication 1, **caractérisé en ce que** les fibres de la couche de non-tissé (3) sont insensibles à l'humidité et choisies dans le groupe des fibres de verre, fibres de polymère, fibres de cellulose, et/ou fibres de carbone, y compris sous forme de fibres hybrides.

6. Système de revêtement selon l'une quelconque des revendications précédentes, **caractérisé en ce que** la couche de fibres embrouillées (3) est composée de fibres disposées à plat qui constituent un non-tissé non comprimé.

7. Système de revêtement selon la revendication, **caractérisé en ce que** les fibres ont une longueur (titre) comprise entre 1 et 20 mm et que le diamètre des fibres est compris entre 0,1 et 1 mm.

8. Système de revêtement selon la revendication 1 , **caractérisé en ce que** la densité de fibres dans la couche de non-tissé à fibres embrouillées (3) est comprise entre 10 et 100 g par mètre carré de surface de revêtement.

9. Système de revêtement selon la revendication 1, **caractérisé en ce que** la face externe de la couche de recouvrement est garni de sable silicieux d'une granulométrie comprise entre 0,125 et 5 mm et/ou de poudre de quartz.

10. Système de revêtement selon la revendication 1, **caractérisé**, dans le cas où les résines époxy mises en oeuvre sont des composées de condensats d'épichlorhydrine et de bisphénol, en ce que le rapport molaire moyen de l'épichlorhydrine par rapport au bisphénol A est compris entre 1,4 et 1,7.

11. Système de revêtement selon la revendication 1, **caractérisé en ce que** le matériau choisi pour la fabrication du corps (1), autrement dit pour le substrat à revêtir, est une mousse rigide de polystyrène du groupe de mousses XPS ou EPS.

12. Système de revêtement selon la revendication 11; **caractérisé par** la présence d'une couche supplémentaire de mortier, de préférence armé, insérée entre la couche de fond et la mousse rigide de polystyrène choisie comme matériau de fabrication.

13. Système de revêtement selon la revendication 1 , **caractérisé en ce qu'**il est disposé sur la première série de couches en sandwich (2+3+4), au moins une autre couche intermédiaire composée d'un non-tissé à fibres embrouillées et au moins une autre couche de recouvrement.

14. Procédé de fabrication d'un système de revêtement à appliquer sur un corps composé d'un matériau formant le substrat pour ledit système, **caractérisé** premièrement en ce que l'on projette sur la surface dudit corps un mélange de deux composants qui va former en durcissant une masse de résine époxy et que l'on répand ensuite ou l'on souffle par air comprimé, sur la couche encore peu visqueuse, des fibres qui se lient à la couche de résine époxy non encore durcie; deuxièmement en ce que l'on fait alors durcir la couche de résine époxy à froid ou à chaud, troisièmement en ce que l'on applique ensuite une seconde masse de résine époxy à deux composants en phase de faible viscosité, moyennant quoi les couches se lient entre elles grâce à la résine époxy à deux composants qui, après avoir pénétré en phase de faible viscosité dans le non-tissé à fibres embrouillées, y durcit, et quatrièmement en ce que l'on sable la couche de recouvrement sur sa face extérieure.

15. Procédé selon la revendication 14, **caractérisé en ce que** les fibres sont répandues à l'aide d'un tamis sur la couche de résine époxy non encore durcie.

16. Procédé selon la revendication 14, **caractérisé en ce que** les fibres sont coupés dans des rovings d'alimentation immédiatement avant d'être répandues sur la résine époxy à deux composants en phase de faible viscosité.

17. Procédé de fabrication d'un système de revêtement selon la revendication 14, **caractérisé**, premièrement, en ce que l'on applique un non-tissé à fibres embrouillées comme couche d'étoffe nappée sur une feuille de support, deuxièmement, en ce que l'on projette sur la surface du corps, comme couche de fond, un mélange de deux composants qui forment en durcissant une masse de résine époxy et que l'on colle la feuille de support comportant le non-tissé sur ladite couche de fond, troisièmement, en ce que l'on applique ensuite sur la couche d'étoffe nappée, une seconde masse de résine époxy à deux composants en phase de faible viscosité et quatrièmement, en ce que l'on sable la couche de recouvrement sur sa face extérieure.

18. Panneau de construction doté d'un revêtement, comprenant un substrat (1) en mousse de polyuréthane rigide revêtu sur un côté d'une couche de fond composée d'une masse de résine époxy durcie liée à une couche de fibres embrouillées (3), dans lequel les différentes couches se sont liées entre elles du fait de la pénétration en phase de faible viscosité puis du durcissement de la résine époxy dans la couche de non-tissé à fibres embrouillées, lesdites couches formant ainsi une couche de recouvrement (4) dont la face extérieure a été sablée (5).
